# FASCICULE DE BREVET EUROPEEN

(11) **EP 1 028 217 B1**
(45) Date de publication et mention de la délivrance du brevet: **07.07.2004**
(21) Numéro de dépôt: 00400372.9
(22) Date de dépôt: 09.02.2000
(51) Int. Cl.: E06B 3/96, B29C 65/20

(54) **Cadre de fenêtre et son procédé de réalisation**
Fensterrahmen und Verfahren zu seiner Herstellung
Window frame and method of manufacturing same

(30) Priorité: 11.02.1999 FR 9901605
(43) Date de publication de la demande: 16.08.2000
(73) Titulaire: Lapeyre, 93300 Aubervilliers (FR)
(72) Inventeur: Macquart, Philippe, 92600 Asnieres (FR); Carel, Rémi, 69005 Lyon (FR)
(74) Mandataire: Cardin, Elise

(56) Documents cités:
- EP-A- 0 698 719
- EP-A- 0 900 907
- DE-A- 2 113 804
- DE-B- 1 779 361
- DE-C- 3 405 384

## Description

L'invention concerne un procédé de réalisation d'un cadre de fenêtre constitué essentiellement de profilés en matière plastique assemblés entre eux par soudage.

L'invention concerne également un cadre de fenêtre obtenu à partir dudit procédé de réalisation.

Tout d'abord, par cadre de fenêtre, on entend le châssis fixe ou ouvrant, ou le dormant d'une fenêtre.

D'une manière générale, une fenêtre comporte au moins un vitrage assemblé sur un châssis porteur, mobile ou non, monté sur un dormant qui est fixé dans la maçonnerie.

D'une manière classique, le cadre de fenêtre est constitué de plusieurs profilés assemblés entre eux de manière soit à encadrer l'ouverture prévue à cet effet dans la maçonnerie, soit à recevoir un vitrage, les profilés présentant alors un logement prévu à cet effet et appelé feuillure à verre.

Lorsque le cadre de fenêtre est en matière plastique telle que, par exemple, du polychlorure de vinyle (PVC), l'assemblage des profilés est généralement effectué par thermosoudage aux angles dudit cadre. Cet assemblage s'effectue par fusion de la matière plastique de chaque profilé sur quelques millimètres avant serrage des profilés pour obtenir un soudage. Le serrage provoque l'écrasement des parties fondues avec formation dans la zone de jonction d'un bourrelet de matière qui déborde sur les surfaces apparentes du cadre. On doit donc ensuite ébavurer les parties soudées afin d'éliminer le surplus de matière inesthétique.

Ce procédé, bien que couramment employé, présente un certain nombre d'inconvénients auxquels il serait souhaitable de remédier, au moins en partie.

Tout d'abord, il résulte d'un tel procédé que les dimensions finales souhaitées du cadre soudé ne sont pas atteintes de façon précise et sont en général variables de plus ou moins 1 mm.

Ainsi, lorsque, par exemple, le vitrage est immobilisé dans le châssis par l'intermédiaire de parcloses rapportées qui sont fixées sur le châssis par clippage ou par tout autre moyen de fixation connu de l'homme du métier, chaque parclose doit être coupée à la dimension précise constatée après soudage pour s'insérer parfaitement dans le cadre du châssis.

En conséquence, un tel produit génère énormément d'opérations et de main d'oeuvre pour sa mise en oeuvre.

De plus, cela nécessite un stockage important des pièces constituant le cadre, ainsi qu'une gestion très précise.

Par ailleurs, l'élimination d'un surplus de matière des zones de jonction implique une perte de matière, en plus du temps de traitement correspondant qui grève encore la rentabilité du procédé.

On connaît par le document DE-A-21 13 804 un procédé d'assemblage d'éléments de menuiserie constitué d'un profilé extérieur en matière plastique, d'un profilé métallique destiné à jouer un rôle de renfort au sein des deux profilés en matière plastique et d'un profilé intérieur en matière plastique. La liaison entre les deux éléments en matière plastique pour former un angle s'effectue par soudure.

On connaît par le document DE-B-17 79 361 une méthode de soudure de profilé proche de la précédente. Un renfort d'angle métallique est inséré entre une pièce intérieure et une pièce extérieure, toutes deux en résine thermoplastique

Pour ces deux procédés, lors de la soudure, le profilé extérieur et le profilé intérieur, tous deux en matière plastique thermosoudable, fondent et leur longueur après assemblage est inférieure à leur longueur initiale. Seul le profilé métallique conserve sa longueur initiale et garantit la côte.

La présente invention a pour but d'améliorer ce type de fabrication.

L'invention a donc pour objet un nouveau procédé de réalisation de cadre de fenêtre constitué essentiellement de profilés en matière plastique assemblés entre eux par soudage qui soit de mise en oeuvre aisée, qui diminue le nombre d'opérations et qui facilite la gestion des stocks.

L'invention propose un procédé de réalisation d'un cadre de fenêtre constitué essentiellement de profilés en matière plastique assemblés entre eux par soudage, tel que l'on tronçonne les profilés de manière à ce qu'au moins une partie de la section desdits profilés détermine la longueur requise des profilés, puis l'on assemble les profilés entre eux par thermosoudage en évitant le soudage des parties des sections des profilés déterminant la longueur requise des profilés.

Par longueur requise, on entend la longueur des profilés déterminée au millimètre près pour la constitution du cadre une fois les profilés assemblés.

De préférence, les parties des sections des profilés déterminant la longueur requise des profilés servent de butée lors de l'assemblage par thermosoudage.

De cette manière, après avoir fait fondre une partie des extrémités des profilés, le serrage des profilés est bloqué dans sa course grâce aux parties des sections non soudées et ainsi l'assemblage des profilés entre eux permet l'obtention d'un cadre dont les dimensions sont prédéterminées de manière précise. De cette façon, toute pièce supplémentaire préfabriquée peut être mise en place sans qu'il soit nécessaire de constater après assemblage les dimensions du cadre assemblé pour ajuster les dimensions de la pièce.

Selon un mode de réalisation préféré de l'invention, on tronçonne les profilés en réalisant au moins un retrait des côtés latéraux desdits profilés, ledit retrait déterminant la longueur requise desdits profilés.

De cette manière, lors de l'assemblage, les côtés latéraux des profilés viennent se mettre bord à bord sans être soudé l'un à l'autre et on évite ainsi l'apparition de surplus de matière à éliminer.

Selon un autre mode de réalisation de l'invention, les profilés présentent au moins une parclose solidaire auxdits profilés et mobile et on tronçonne les profilés en réalisant au moins un retrait au niveau de la parclose, ledit retrait déterminant la longueur requise desdits profilés.

De cette façon, on assemble les profilés entre eux jusqu'à ce que les parcloses viennent se mettre bord à bord. Le cadre obtenu présente ainsi les dimensions prédéterminées, les parcloses déterminant la longueur requise.

Selon une autre variante de l'invention, on tronçonne les profilés en réalisant au moins un retrait au niveau d'une zone de positionnement d'un joint d'étanchéité, ledit retrait déterminant la longueur requise desdits profilés.

Les profilés peuvent être équipés du joint d'étanchité après leur assemblage en forme de cadre , ou bien avant l'assemblage, le joint étant éventuellement coextrudé sur le profilé lors de la fabrication de ce dernier.

De préférence, le joint est un joint extrudé de manière séparée (extrusion « au kilomètre »), que l'on découpe à la longueur requise du profilé avant de le mettre en place sur le profilé dans la zone de positionnement prévue à cet effet, en alignant les extrémités des joints avec les retraits de ladite zone.

Dans cette variante, on procède à l'assemblage en évitant le soudage des profilés sur la zone de positionnement du joint.

De cette manière, lors de l'assemblage des profilés, on évite la soudure des joints et ainsi l'apparition d'un excès de matière au niveau de leur contact. Il suffit alors de coller les extrémités libres des joints afin de réaliser l'étanchéité de l'ensemble.

Selon une réalisation préférée de l'invention, applicable à chaque mode ou variante de réalisation décrit précédemment, le retrait est compris entre 1 et 3 mm.

Selon une variante de l'invention, on intègre un profilé en matière plastique ou métallique à l'intérieur des profilés constituant le cadre de fenêtre et qui présente la longueur requise des profilés de manière à servir de butée lors de l'assemblage par thermosoudage.

L'invention a également pour objet un nouveau cadre de fenêtre susceptible d'être obtenu à partir du procédé de réalisation précédemment décrit.

L'invention propose un cadre de fenêtre constitué essentiellement de profilés en matière plastique assemblés entre eux par soudage tel que la surface d'assemblage des profilés présente au moins une zone non soudée.

De cette manière, lors de l'assemblage, une partie de la section d'un profilé est soudée à une partie correspondante de la section d'un second profilé, et le reste de la section du profilé est simplement en contact bord à bord avec le reste correspondant de la section du second profilé.

Selon une variante avantageuse de l'invention, la zone non soudée est au moins les côtés latéraux desdits profilés.

De cette façon, lorsque les profilés sont assemblés, la jonction soudée se fait dans une partie des profilés non exposée à la vue et il n'apparaît plus de zone de rectification au niveau des côtés latéraux, ladite zone de rectification correspondant à l'ébavurage de l'excès de matière résultant du soudage. Ainsi la zone d'assemblage est au niveau des bords latéraux quasi invisible.

Selon une variante préférée de l'invention, les profilés présentent au niveau des côtés latéraux une double paroi, les deux parois étant espacées l'une de l'autre, et la zone non soudée est la paroi extérieure de la double paroi.

De cette manière, on garde une paroi soudée au niveau des côtés latéraux ce qui permet de garantir l'étanchéité de l'assemblage et de garder une bonne résistance de l'ensemble de la soudure, en particulier en terme de résistance à la casse d'angle. Par ailleurs, l'espace entre les deux parois permet de recevoir l'excès de matière résultant de la soudure et ainsi de garder un contact bord à bord de la paroi extérieure sans nécessité d'ébavurage.

Selon une variante de l'invention, les profilés présentent au moins une parclose solidaire desdits profilés et mobile, et les extrémités des parcloses sont non soudées entre elles.

Selon une variante avantageuse de l'invention, la zone non soudée des profilés est au moins la zone de positionnement d'un joint d'étanchéité. Ainsi, au niveau de la surface d'assemblage, il n'apparaît pas de noeud correspondant au soudage des joints d'étanchéité entre eux, un tel noeud n'étant pas acceptable et devant être nécessairement éliminé.

De préférence, les joints d'étanchéité sont collés entre eux à leurs extrémités. De cette manière, on réalise l'étanchéité sur la totalité du pourtour du cadre.

Selon une réalisation de l'invention, un profilé en matière plastique est intégré dans les profilés constituant le cadre de fenêtre, ledit profilé en matière plastique présentant la même longueur que les profilés assemblés et n'est pas soudé lors de l'assemblage.

Selon une autre réalisation de l'invention, un profilé métallique est intégré dans les profilés constituant le cadre de fenêtre, ledit profilé métallique présentant la même longueur que les profilés assemblés.

Selon une variante avantageuse de l'invention, ledit profilé intégré est une crémone.

Le cadre ainsi obtenu présente avantageusement des dimensions prédéfinies au millimètre près, est facile à mettre en oeuvre et simplifie le procédé de réalisation.

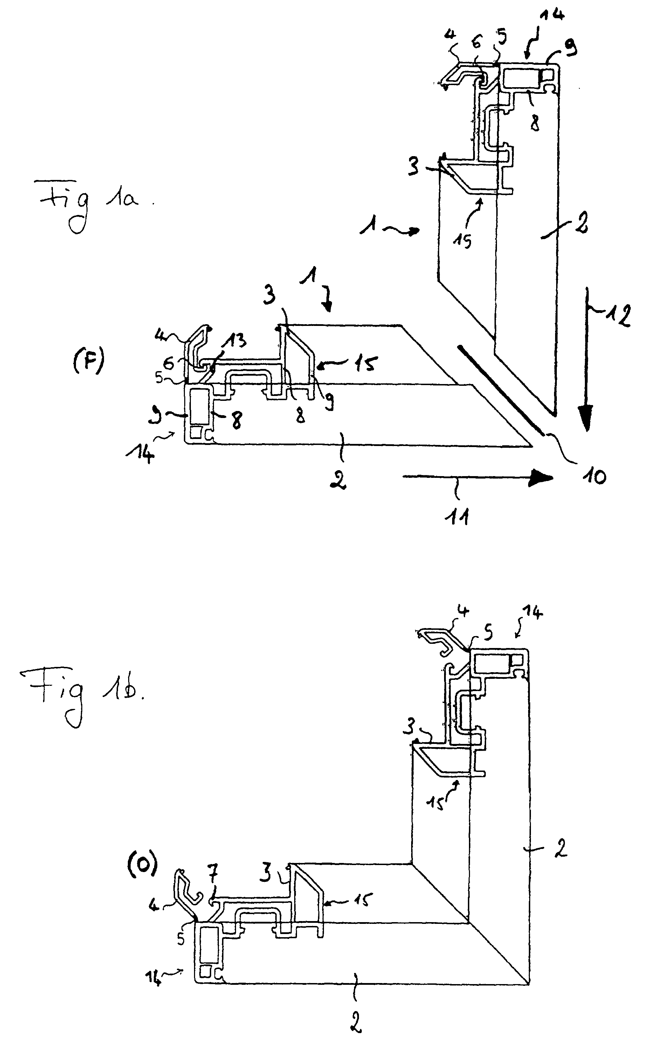

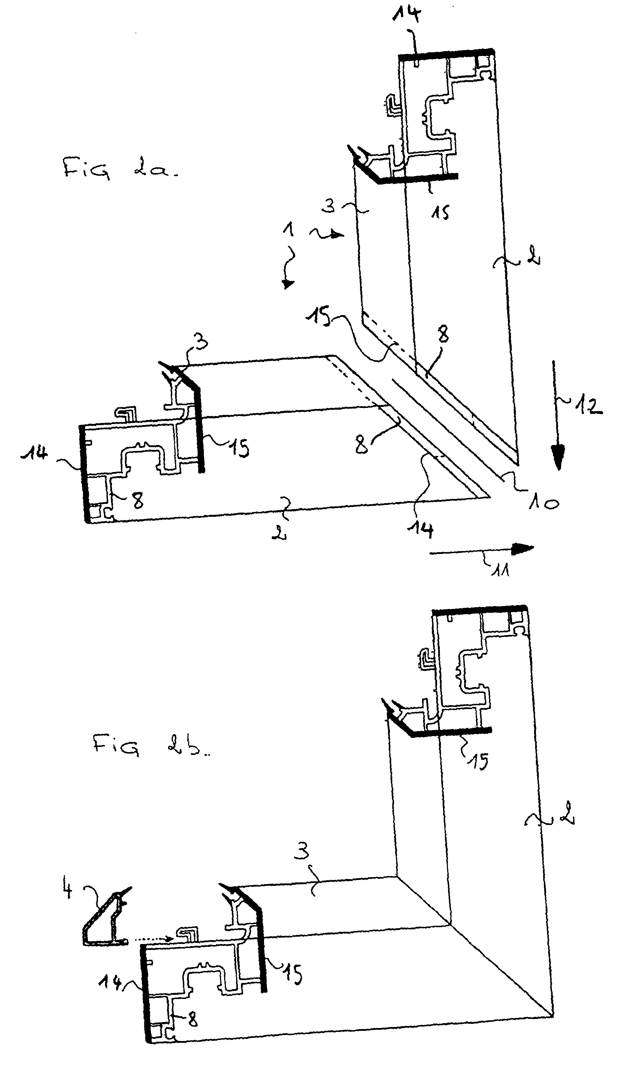

D'autres détails et caractéristiques avantageuses apparaitront dans la description d'exemples de réalisation d'un cadre de fenêtre selon l'invention constitué essentiellement de profilés en matière plastique assemblés entre eux par soudage, faite en référence aux figures 1a, 1b, 2a et 2b qui représentent :
. Figures 1a et 1b : schémas d'un premier mode de réalisation selon l'invention.
. Figures 2a et 2b schémas d'un second mode de réalisation selon l'invention.

On précise tout d'abord que, par souci de clarté, toutes les figures ne respectent pas rigoureusement les proportions entre les divers éléments représentés.

Le cadre de fenêtre est constitué de profilés 1 en polychlorure de vinyl (PVC). Ces profilés 1 sont constitués d'un profilé principal 2 et de deux parcloses 3 et 4 coupés en biseau à leurs extrémités.

Sur les figures 1a et 1b, on a représenté un premier mode de réalisation selon l'invention tel que les parcloses 3 et 4 servent de butée au soudage des profilés 1.

La parclose 3 est solidaire du profilé principal 2, liée fixe par rapport à ce dernier, alors que la parclose 4 est solidarisée au profilé principal 2 par l'intermédiaire d'une partie flexible longitudinale 5, formant liaison entre parclose et profilé. La parclose 4 est ainsi mobile entre une position ouverte (O) et une position fermée (F) par pivotement autour de l'axe de la partie flexible 5, la fermeture étant assurée par un clippage 6 sur une partie correspondante 7 du profilé principal 2

Cette partie flexible 5 peut être constituée d'un polymère rigide, notamment celui du profilé principal 2, avec une section mince autorisant la flexion. En variante, la partie flexible peut être obtenue par coextrusion d'un matériau souple, tel que par exemple PVC plastifié, avec le matériau profilé principal 2.

Le profilé principal présente sur chaque côté latéral 14,15, c'est-à-dire sur chaque face dans le plan du cadre, une double paroi avec une paroi intérieure 8 et une paroi extérieure 9.

Sur la figure 1a, on observe que les parcloses 3 et 4 sont délignées 3 mm plus court que le profilé principal 2. Le retrait réalisé sur les parcloses 3 et 4 correspond à la longueur requise du profilé 1. Pour effectuer l'assemblage, on place dans un dispositif approprié connu de l'homme du métier, les profilés 1 sur lesquels les parecloses 4 sont clipsées en position fermée (F), les surfaces biseautées (formant surfaces d'assemblage) des profilés 1 étant disposées en regard les unes des autres avec un écartement déterminé.

Les plaques chauffantes 10 de la soudeuse sont insérées dans ledit écartement de manière à venir uniquement en contact avec la section des profilés principaux 2, notamment les doubles parois 8, 9. Après un temps suffisant pour fondre la matière plastique à proximité des surfaces -d'assemblage, les plaques chauffantes 10 vont être rétractées et les profilés 1 vont être serrés l'un sur l'autre dans le sens des flèches 11 et 12. Ceci provoque l'écrasement de la matière fondue le long de la section des profilés principaux 2 jusqu'à ce que les parcloses 3, respectivement 4, en regard viennent en butée l'une contre l'autre, ce qui détermine avec précision les dimensions du cadre assemblé.

Sur la figure 1b, les profilés principaux 2 sont soudés l'un à l'autre après fusion de 3 mm de matière. Les parcloses 3 et 4 ayant servi de butée lors du serrage, elles ne sont pas soudées et la parclose 4 peut donc se déclipper facilement et venir en position ouverte (O) par pivotement autour de l'axe de la partie flexible 5, pour introduire un vitrage dans le cadre de fenêtre ainsi réalisé.

En variante, la parclose 4 peut être un élément distinct du profilé principal 2 clippable sur ce dernier au moyen d'un clippage analogue à celui décrit ci-dessus.

Après assemblage de façon analogue à celle qui vient d'être décrite, les parcloses 3 et 4 n'étant pas soudées à leurs homologues voisines, la parclose libre 4 de chaque profilé 1 peut se déclipper facilement pour permettre au cadre de recevoir le vitrage.

Dans ce premier mode de réalisation, la formation d'un bourrelet de matière en surplus dans la zone de jonction subsiste, mais est limitée à la section des profilés principaux 2. L'ébavurage est donc simplifié par rapport au procédé connu.

Malgré le soudage d'une partie seulement de la section des profilés 1, l'ensemble est étanche grâce au fait que les parois intérieures 8 et les parois 13 portant les clips 7 sont soudées entre elles, créant une barrière continue à l'humidité à l'intérieur du cadre.

Sur les figures 2a et 2b, on a représenté un second mode de réalisation selon l'invention tel que les profilés 1 sont dépourvus de la parclose 4 mobile, et les côtés latéraux 14 et 15 du profilé 1, qui comprennent les parois extérieures 9, servent de butée au soudage. Les élément de cadre identiques à ceux du premier mode de réalisation portent les mêmes numéros de référence.

Sur la figure 2a, on observe que les côtés latéraux 14 et 15 du profilé 1 sont délignés 3 mm plus court que l'intérieur du profilé principal 2, en particulier que les parois intérieures 8. Les parties en retrait de la section du profilé sont noircies sur les vues de côté rapportées sur les schémas des figures 2a et 2 b. Le retrait des côtés latéraux 14 et 15 correspond à la longueur requise du profilé 1.

Pour l'assemblage, les plaques chauffantes 10 de la soudeuse viennent alors uniquement en contact avec la section intérieure des profilés 1, puis les profilés 1 vont être serrés l'un sur l'autre dans le sens des flèches 11 et 12 comme précédemment.

Cette fois-ci, l'écrasement de la matière fondue ne se produit que sur la section intérieure des profilés, de sorte que le surplus de matière qui forme ordinairement un bourrelet à la surface du cadre se trouve maintenant contenu dans les profilés 1.

Lorsque les côtés latéraux 14, respectivement 15, en regard viennent en butée l'un contre l'autre au cours du serrage, d'une part les dimensions du cadre sont déterminées avec précision, et d'autre part la jonction des profilés aux angles est obtenue sans débordement de matière à la surface du cadre exposée à la vue. Ceci permet d'éviter l'ébavurage des angles.

Sur la figure 2b, l'intérieur des profilés 1 est soudé après fusion de 3 mm de matière. Les côtés latéraux 14 et 15 ayant servi de butée lors du serrage, ils ne sont pas soudés mais sont simplement en contact avec leurs homologues voisins.

L'assemblage est étanche ici encore grâce au fait que les parois intérieures 8 sont soudées entre elles, créant une barrière continue à l'humidité à l'intérieur du cadre.

En variante à la réalisation représentée sur les figures 2a et 2b, la paroi intérieure 8 du côté 14 portant la parclose mobile 4 pourrait se prolonger sur toute la hauteur du profilé principal 2 de façon à doubler entièrement la paroi extérieure 9.

Dans une autre variante, une paroi intérieure supplémentaire spécialement dédiée à l'étanchéité du cadre pourrait s'étendre à faible distance de la paroi extérieure 9 du côté 14 portant la parclose mobile 4, et doubler la paroi extérieure 9.

## Revendications

1. Procédé de réalisation d'un cadre de fenêtre constitué essentiellement de profilés (1) en matière plastique thermosoudable assemblés entre eux par soudage,
**caractérisé en ce que :**
- on tronçonne les profilés (1) en matière plastique thermosoudable de manière à ce qu'au moins une partie (3, 4, 14, 15) de la section desdits profilés détermine la longueur requise des profilés en matière plastique thermosoudable,
- on assemble les profilés (1) en matière plastique thermosoudable entre eux par thermosoudage en évitant le soudage des parties (3, 4, 14, 15) des sections des profilés en matière plastique thermosoudable déterminant la longueur requise des profilés en matière plastique thermosoudable, lesdites parties (3, 4, 14, 15) des sections des profilés en matière plastique thermosoudable qui déterminent la longueur requise servant de butée lors de l'assemblage par thermosoudage.

2. Procédé de réalisation selon la revendication 1, **caractérisé en ce qu'**on tronçonne les profilés (1) en matière plastique thermosoudable en réalisant au moins un retrait des côtés latéraux (14, 15) desdits profilés, ledit retrait déterminant la longueur requise desdits profilés.

3. Procédé de réalisation selon l'une des revendications précédentes, **caractérisé en ce que** les profilés (1) en matière plastique thermosoudable présentent au moins une parclose (4) solidaire auxdits profilés et mobile **et en ce qu'**on tronçonne les profilés (1) en matière plastique thermosoudable en réalisant au moins un retrait au niveau de la parclose (4), ledit retrait déterminant la longueur requise desdits profilés.

4. Procédé de réalisation selon l'une des revendications précédentes, **caractérisé en ce qu'**on tronçonne les profilés (1) en matière plastique thermosoudable en réalisant au moins un retrait au niveau de la zone de positionnement d'un joint d'étanchéité, ledit retrait déterminant la longueur requise desdits profilés.

5. Procédé de réalisation selon la revendication 4, **caractérisé en ce que** le joint est un joint extrudé que l'on met en place sur le profilé (1) en matière plastique thermosoudable de manière à ce qu'il présente la longueur requise du profilé en matière plastique thermosoudable **et en ce qu'**après l'assemblage des profilés (1) en matière plastique thermosoudable par thermosoudage, on colle les extrémités des joints entre eux.

6. Procédé de réalisation selon l'une des revendications 2 à 4, **caractérisé en ce que** le retrait est compris entre 1 et 3 mm.

7. Cadre de fenêtre constitué essentiellement de profilés (1) en matière plastique thermosoudable assemblés entre eux par soudage, **caractérisé en ce que** la surface d'assemblage des profilés en matière plastique thermosoudable présente au moins une zone (3, 4 ; 14, 15) non soudée, avec une partie de la section d'un profilé soudée à une partie correspondante de la section d'un second profilé et le reste de la section du profilé en contact bord à bord avec le reste correspondant de la section du second profilé, la zone non soudée des profilés en matière plastique thermosoudable étant au moins les côtés latéraux (14, 15) desdits profilés (1).

8. Cadre de fenêtre selon la revendication 7, **caractérisé en ce que** les profilés en matière plastique thermosoudable (1) présentent au niveau des côtés latéraux (14, 15) une double paroi (8, 9), les deux parois (8, 9) étant espacées l'une de l'autre et **en ce que** la zone non soudée est la paroi extérieure (9) de la double paroi.

9. Cadre de fenêtre selon l'une des revendications 7 ou 8, **caractérisé en ce que** les profilés en matière plastique thermosoudable (1) présentent au moins une parclose (4) solidaire dudit profilé et mobile et **en ce que** les extrémités des parcloses (4) sont non soudées.

10. Cadre de fenêtre selon l'une des revendications 7 à 9, **caractérisé en ce que** la zone non soudée des profilés en matière plastique thermosoudable (1) comprend aussi la zone de positionnement d'un joint d'étanchéité.

11. Cadre de fenêtre selon la revendication 10, **caractérisé en ce que** les joints d'étanchéité sont collés entre eux à leurs extrémités.

12. Cadre de fenêtre selon l'une des revendications 7 à 11, **caractérisé en ce que** un profilé en matière plastique est intégré dans les profilés en matière plastique thermosoudable (1) constituant le cadre de fenêtre, ledit profilé en matière plastique présentant la même longueur que les profilés en matière plastique thermosoudable (1) assemblés et n'est pas soudé lors de l'assemblage.

13. Cadre de fenêtre selon la revendication 12, **caractérisé en ce que** ledit profilé intégré est une crémone.

## Patentansprüche

1. Verfahren zur Herstellung eines Fensterrahmens, der im Wesentlichen aus wärmeverschweißbaren Kunststoffprofilen (1) besteht, die durch Schweißen miteinander verbunden sind, **dadurch gekennzeichnet, dass**
- die wärmeverschweißbaren Kunststoffprofile (1) derart zerteilt werden, dass mindestens ein Teil (3, 4, 14, 15) des Querschnitts der Profile die erforderliche Länge der wärmeverschweißbaren Kunststoffprofile bestimmt und
- die wärmeverschweißbaren Kunststoffprofile (1) durch Wärmeschweißen miteinander verbunden werden, wobei das Verschweißen der Teile (3, 4, 14, 15) der Querschnitte der wärmeverschweißbaren Kunststoffprofile vermieden wird, die die erforderliche Länge der wärmeverschweißbaren Kunststoffprofile bestimmen, wobei die Teile (3, 4, 14, 15) der Querschnitte der wärmeverschweißbaren Kunststoffprofile, welche die erforderliche Länge bestimmen, während des Verbindens durch Wärmeschweißen als Anschlag dienen.

2. Herstellungsverfahren nach Anspruch 1, **dadurch gekennzeichnet, dass** die wärmeverschweißbaren Kunststoffprofile (1) zerteilt werden, wobei mindestens ein Absatz der Seitenflächen (14, 15) der Profile ausgeführt wird, der die erforderliche Länge der Profile bestimmt.

3. Herstellungsverfahren nach einem der vorhergehenden Ansprüche, **dadurch gekennzeichnet, dass** die wärmeverschweißbaren Kunststoffprofile (1) mindestens eine Deckleiste (4) aufweisen, die fest mit den Profilen verbunden und beweglich ist, **und dass** die wärmeverschweißbaren Kunststoffprofile (1) zerteilt werden, wobei mindestens ein Absatz, der die erforderliche Länge der Profile bestimmt, an der Deckleiste (4) ausgeführt wird.

4. Herstellungsverfahren nach einem der vorhergehenden Ansprüche, **dadurch gekennzeichnet, dass** die wärmeverschweißbaren Kunststoffprofile (1) zerteilt werden, wobei in dem Bereich der Anordnung einer Dichtung mindestens ein Absatz ausgeführt wird, der die erforderliche Länge der Profile bestimmt.

5. Herstellungsverfahren nach Anspruch 4, **dadurch gekennzeichnet, dass** die Dichtung eine extrudierte Dichtung ist, die auf dem wärmeverschweißbaren Kunststoffprofil (1) derart angebracht wird, dass sie die erforderliche Länge des wärmeverschweißbaren Kunststoffprofils besitzt, **und dass** nach dem Verbinden der wärmeverschweißbaren Kunststoffprofile (1) durch Wärmeschweißen die Enden der Dichtungen miteinander verklebt werden.

6. Herstellungsverfahren nach einem der Ansprüche 2 bis 4, **dadurch gekennzeichnet, dass** der Absatz 1 bis 3 mm beträgt.

7. Fensterrahmen, der im Wesentlichen aus wärmeverschweißbaren Kunststoffprofilen (1) besteht, die durch Schweißen miteinander verbunden sind, **dadurch gekennzeichnet, dass** die Verbindungsfläche der wärmeverschweißbaren Kunststoffprofile mindestens einen unverschweißten Bereich (3, 4; 14, 15) aufweist, wobei ein Teil des Querschnitts eines Profils mit einem entsprechenden Teil des Querschnitts eines zweiten Profils verschweißt ist, der Rest des Querschnitts des Profils sich Stoß an Stoß mit dem entsprechenden Rest des Querschnitts des zweiten Profils in Berührung befindet und der unverschweißte Bereich der wärmeverschweißbaren Kunststoffprofile wenigstens die Seitenflächen (14, 15) dieser Profile (1) sind.

8. Fensterrahmen nach Anspruch 7, **dadurch gekennzeichnet, dass** die wärmeverschweißbaren Kunststoffprofile (1) in den Seitenflächen (14, 15) eine Doppelwand (8, 9) aufweisen und die beiden Wände (8, 9) voneinander beabstandet sind, und dass der unverschweißte Bereich die Außenwand (9) der Doppelwand ist.

9. Fensterrahmen nach Anspruch 7 oder 8, **dadurch gekennzeichnet, dass** die wärmeverschweißbaren Kunststoffprofile (1) mindestens eine Deckleiste (4) aufweisen, die fest mit diesem Profil verbunden und beweglich ist, **und dass** die Enden der Deckleisten (4) unverschweißt sind.

10. Fensterrahmen nach einem der Ansprüche 7 bis 9, **dadurch gekennzeichnet, dass** der unverschweißte Bereich der wärmeverschweißbaren Kunststoffprofile (1) auch den Bereich der Anordnung einer Dichtung enthält.

11. Fensterrahmen nach Anspruch 10, **dadurch gekennzeichnet, dass** die Dichtungen an den Enden miteinander verklebt sind.

12. Fensterrahmen nach einem der Ansprüche 7 bis 11, **dadurch gekennzeichnet, dass** in die den Fensterrahmen bildenden wärmeverschweißbaren Kunststoffprofile (1) ein Kunststoffprofil integriert ist, das dieselbe Länge wie die miteinander verbundenen wärmeverschweißbaren Kunststoffprofile (1) besitzt und bei dem Verbindungsvorgang nicht verschweißt wird.

13. Fensterrahmen nach Anspruch 12, **dadurch gekennzeichnet, dass** das integrierte Profil ein Stangenriegel ist.

## Claims

1. Method of producing a window frame consisting essentially of profiled members (1) made from heat-welding plastics material connected together by welding, **characterised in that**:
- the profiled members (1) made from heat-welding plastics material are cut so that at least part (3, 4, 14, 15) of the section of the said profiled members determines the required length of the profiled members made from heat-welding plastics material,
- the profiled members (1) made from heat-welding plastics material are connected together by heat welding avoiding welding of the parts (3, 4, 14, 15) of the sections of the profiled members made from heat-weldable plastics material determining the required length of the profiled sections made from heat-weldable plastics material, the said parts (3, 4, 14, 15) of the sections of the profiled members made from heat-weldable plastics material which determine the required length serving as a stop during the assembly by heat welding.

2. Production method according to Claim 1, **characterised in that** the profiled members (1) made from heat-weldable plastics material are cut, effecting at least one indentation in the lateral sides (14, 15) of the said profiled members, the said indentation determining the required length of the said profiled members.

3. Production method according to one of the preceding claims, **characterised in that** the profiled members (1) made from heat-weldable plastics material have at least one glazing bead (4) fixed to the said profiled members [and] whilst being itself movable and **in that** the profiled members (1) made from heat-weldable plastics material are cut, producing at least one indentation at the glazing bead (4), the said indentation determining the required length of the said profiled members.

4. Production method according to one of the preceding claims, **characterised in that** the profiled members (1) made from heat-weldable plastics material are cut, producing at least one indentation at the area of positioning of a seal, the said indentation determining the required length of the said profiled members.

5. Production method according to Claim 4, **characterised in that** the seal is an extruded seal which is fitted on the profiled member (1) made from heat-weldable plastics material so that it has the required length of the profiled member made from heat-weldable plastics material and **in that**, after the assembly of the profiled members (1) made from heat-weldable plastics material by heat welding, the ends of the seals are adhesively bonded to each other.

6. Production method according to one of Claims 2 to 4, **characterised in that** the indentation is between 1 and 3 mm.

7. Window frame consisting essentially of profiled members (1) made from heat-weldable plastics material connected together by welding, **characterised in that** the connection surface of the profiled members made from heat-weldable plastics material has at least one non-welded zone (3, 4; 14, 15), with a part of the section of a profiled member welded to a corresponding part of the section of a second profiled member and the remainder of the section of the profiled member in edge to edge contact with the corresponding remainder of the section of the second profiled member, the non-welded zone of the profiled members made from heat-weldable plastics material being at least the lateral sides (14, 15) of the said profiled members (1).

8. Window frame according to Claim 7, **characterised in that** the profiled members made from heat-weldable plastics material (1) have a double wall (8, 9) at the lateral sides (14, 15), the two walls (8, 9) being spaced apart from each other, and **in that** the non-welded zone is the external wall (9) of the double wall.

9. Window frame according to one of Claims 7 or 8, **characterised in that** the profiled members made from heat-weldable plastics material (1) have at least one glazing bead (4) fixed to the said profiled member and movable, and **in that** the ends of the glazing beads (4) are not welded.

10. Window frame according to one of Claims 7 to 9, **characterised in that** the non-welded zone of the profiled members made from heat-weldable plastics material (1) also comprises the positioning zone of a seal.

11. Window frame according to Claim 10, **characterised in that** the seals are adhesively bonded to each other at their ends.

12. Window frame according to one of Claims 7 to 11, **characterised in that** a profiled member made from plastics material is integrated in the profiled members made from heat-weldable plastics material (1) constituting the window frame, the said profiled member made from plastics material having the same length as the assembled profiled members made from heat-weldable plastics material (1) and is not welded during assembly.

13. Window frame according to Claim 12, **characterised in that** the said integrated profiled member is a casement bolt.
